# EUROPÄISCHE PATENTSCHRIFT

(11) **EP 1 119 481 B1**
(45) Veröffentlichungstag und Bekanntmachung des Hinweises auf die Patenterteilung: **09.04.2003**
(21) Anmeldenummer: 98958207.7
(22) Anmeldetag: 16.10.1998
(51) Int. Cl.: B60V 1/14

(54) **LUFTKISSENFAHRZEUG**
HOVERCRAFT
VEHICULE AEROGLISSEUR

(43) Veröffentlichungstag der Anmeldung: 01.08.2001
(73) Patentinhaber: Blum, Klaus, 8700 Küsnacht (CH)
(72) Erfinder: Blum, Klaus, 8700 Küsnacht (CH)
(74) Vertreter: Patentanwälte Lippert, Stachow, Schmidt & Partner
(86) Internationale Anmeldenummer: DE9803086
(87) Internationale Veröffentlichungsnummer: WO00023309

(56) Entgegenhaltungen:
- WO-A-85/05335
- WO-A-87/00492
- DE-A- 19 725 740
- DE-U- 29 503 967
- FR-A- 2 118 850
- GB-A- 1 086 919
- US-A- 3 153 461

## Beschreibung

Die Erfindung betrifft ein Luftkissenfahrzeug nach dem Oberbegriff des Anspruchs 1.

Solche Luftkissenfahrzeuge sind beispielsweise durch die WO87/00492 bekannt.

Die bekannten Bauformen von Luftkissenfahrzeugen weisen alle ein hohes Gewicht auf. Außerdem ist das Gewicht konstruktionsbedingt oder betriebsbedingt ungleichmäßig auf dem Fahrzeug verteilt. Bei diesem Fahrzeugtyp ist eine gleichmäßige Gewichtsverteilung jedoch besonders wichtig, da ein schlecht austachiertes Luftkissenfahrzeug leicht aus dem idealen Schwebezustand in ein instabiles Verhalten gerät. Eine ungleichmäßige Gewichtsverteilung muß dann durch ein aufwendiges und schweres Ballastsystem ausgeglichen werden.

Bei bekannten Luftkissenfahrzeugen der genannten Art, insbesondere bei kleineren Luftkissenfahrzeugen, ist das Schubaggregat häufig starr im Heckbereich des Decks angebracht und das Gewicht dort konzentriert.

Das starre Schubaggregat dieser Bauform ist zur Richtungssteuerung mit einem oder mehreren Rudern versehen, mit dem der erzeugte Luftstrom unter starken Reibungsverlusten umgelenkt werden muß. Eine weitere Bauform weist mehrere starre Schubaggregate auf, welche die Fahrtrichtung mittels einer individuellen Regelung der Luftschraubendrehzahl jedes einzelnen Schubaggregates steuern. Der Motor ist bei beiden Bauformen von Luftkissenfahrzeugen nah an dem/den starr angeordneten Schubaggregat(en) vorgesehen und konzentriert dadurch noch mehr Gewicht im Heckbereich des Luftkissenfahrzeugs. Um die notwendige gleichmäßige Gewichtsverteilung zu erreichen, muß in diesem Fall im Bugbereich ein Ballastsystem, beispielsweise in Form eines Behälters zur Aufnahme von Ballastwasser, vorgesehen werden. Dieses erhöht das Gewicht weiter, verleiht dem Luftkissenfahrzeug eine sehr hohe Trägheit und verringert den Nutzraum.

Zum Manörieren muß dem bekannten Luftkissenfahrzeug mit starrem Schubaggregat ein Drehmoment induziert werden. Das Drehmoment dirigiert das Fahrzeug in die gewünschte Fahrtrichtung. Insofern ähnelt die Manövrierfähigkeit daher der eines Schiffes. Aufgrund der hohen Trägheit des Luftkissenfahrzeugs und des geringen Widerstandes, den die Luft der Bewegung des Fahrzeugs entgegensetzt, kann die Drehung jedoch nur beendet werden, indem mit einem entgegengesetzt gerichteten Drehmoment gegengesteuert wird. Auch hierbei wirkt sich die hohe Trägheit des Fahrzeugs wieder nachteilig aus.

Weiterhin weisen die obigen Bauformen strömungstechnische Nachteile auf, insbesondere bei der Vorwärtsfahrt, da der nah an dem Schubaggregt vorgesehene Motor in diesem Fall den Zustrom der Luft auf der Saugseite der Luftschraube behindert. Zudem muß ein mechanischer Antriebsstrang, der die Antriebsmaschine mit der Luftschraube verbindet, vorhanden sein. Dieser besteht beispielsweise aus Wellen, Gelenken, Getrieben, Kupplungen, etc., die ebenfalls das Gewicht des Fahrzeugs und damit seine Trägheit erhöhen.

Unter den größeren Luftkissenfahrzeugen, wie beispielsweise großen Luftkissenfähren, ist eine Bauform bekannt, deren Schubaggregate um eine vertikale Achse schwenkbar ausgebildet sind. Der Luftstrom läßt sich in diesem Fall zur Richtungssteuerung in die gewünschte Richtung drehen. Die schwenkbaren Schubaggregate werden im folgenden als Schwenkaggregate bezeichnet. Diese weisen Antriebswellen auf, die parallel zur vertikalen oder sogar in der vertikalen Schwenkachse des Schwenkaggregates angeordnet sind. Die Antriebswelle wird von einem separaten Motor über ein Winkelgetriebe oder ähnliches angetrieben und treibt selbst über ein weiteres Winkelgetriebe die Luftschraube an. Die Motoren und zusätzlichen Winkelgetriebe erhöhen und konzentrieren das Gewicht im Bereich des Schwenkaggregates.

Um Gewicht einzusparen, könnte die Antriebsenergie eines einzigen Motors zu mehreren Schwenkaggregaten geleitet werden. Dies wäre aber mit dem Nachteil behaftet, daß die Antriebsstränge den Nutzraum sehr einschränken würden.

Je nachdem an welcher Stelle und wieviele Schwenkaggregate angeordnet sind, muß auch bei dieser Bauform ein zusätzliches Ballastsystem vorgesehen werden, um eine gleichmäßige Gewichtsverteilung für das gesamte Fahrzeug zu erreichen.

Bei kleineren Luftkissenfahrzeugen wird wegen des hohen Gewichts und den Problemen bei der Gewichtsverteilung auf die schweren Schwenkaggregate mit separaten Motoren verzichtet.

Zur Bremsung der bekannten Luftkissenfahrzeuge ist es erforderlich, die Richtung der Luftströmung umzukehren. Bekannterweise wird dies beispielsweise dadurch gelöst, daß die Drehrichtung der Luftschraube umgekehrt wird, was den Nachteil hat, daß diese zunächst bis zum Stillstand abgebremst und dann in entgegengesetzter Drehrichtung beschleunigt werden muß. Eine andere Lösung sieht eine Verstellung der Luftschraubenbiätter vor, wobei die Luftströmung bei gleichbleibender Drehrichtung der Luftschraube umgekehrt wird. Hierfür wird jedoch ein mechanisch aufwendiger Verstellmechanismus zur Verstellung der Luftschraubenblätter benötigt.

Der Erfindung liegt die Aufgabe zugrunde, ein mit geringem Energieaufwand betreibbares, gut manövrierbares Luftkissenfahrzeug zu schaffen, das eine gute Raumausnutzung und eine im Verhältnis zu seinem Gewicht hohe Nutzlast aufweist.

Erfindungsgemäß wird die Aufgabe durch die kennzeichnende Merkmalkombination des anspruchs 1 gelöst.

Durch diese Maßnahme ist ein Luftkissenfahrzeug geschaffen, dessen Nutzraum nicht durch einen Antriebsstrang beeinträchtigt ist und das daher eine besonders gute Raumausnutzung aufweist. Als Energieleitung ist eine Elektroleitung vorgesehen, die dem Elektromotor die Antriebsenergie zuführt. Diese ist erheblich leichter als ein mechanischer Antriebsstrang und ist so verlegt, daß sie den Nutzraum des Luftkissenfahrzeugs nicht einschränkt.

Durch den technischen Fortschritt auf dem Gebiet der elektrischen Maschinen und Steuerungen stehen Elektromotoren und Generatoren zur Verfügung, die, bezogen auf ihr Gewicht, eine sehr hohe Leistungsdichte aufweisen. Erst diese neue Antriebstechnik ermöglicht es, einen Elektromotor unmittelbar an der Luftschraube vorzusehen. Durch diese Konstruktion ist das Schubaggregat besonders leicht und benötigt nur einen geringen Bauraum.

Schubaggregate sind mit dieser neuen Maßnahme an vielfältigen Stellen des Luftkissenfahrzeugs anbringbar, beispielsweise strömungsgünstig auf dem Dach des Luftkissenfahrzeugs. Die bisherigen Probleme bei der Konstruktion, nämlich die Gewichtsverteilung des gesamten Fahrzeugs gleichmäßig zu gestalten, lassen sich nun sehr leicht lösen. Auf eine Richtungssteuerung mit einem Ruder und damit einhergehendem Wirkungsgradverlust des Vortriebs kann verzichtet werden. Das Ballastsystem wird nur noch zum Ausgleich von ungleichmäßig verteilter Ladung benötigt und kann nun viel kleiner und leichter ausgebildet sein. Der zentrale Energierzeuger kann an einer vorteilhaften Stelle plaziert werden. Beispielsweise ist es möglich, ein geringes Ungleichgewicht eines mit zwei leichten Heck-Schwenkaggregaten versehenen Luftkissenfahrzeugs auszugleichen, indem der Energieerzeuger an geeigneter Stelle als ausgleichender Ballast vorgesehen wird. Das Luftkissenfahrzeug weist dadurch eine geringe Trägheit auf und ist einfach zu manövrieren. Außerdem steigen die Nutzlast sowie der Nutzraum des Fahrzeugs an.

Die Steuerung der Vortriebsleistung kann mit der vorgeschlagenen Erfindung sehr einfach über eine Regelung der Drehzahl der Luftschraube erfolgen. Da diese von einem Elektromotor angetrieben ist, entfallen aufwendige und sehr schwere Getriebe zur Drehzahländerung und ist die Drehzahl stufenlos und sehr präzise einstellbar. Auch auf eine Ausführung der Luftschraube mit verstellbaren Luftschraubenblättern zur Regelung der Vortriebsleistung, kann verzichtet werden.

Eine Bremsung des Luftkissenfahrzeugs per Umkehr der Strömungsrichtung der Luft ist auch bei der Verwendung von Elektromotoren zum Antrieb der Luftschraube mit den bekannten Methoden möglich. Nämlich, beispielsweise mit einer Umkehrung der Drehrichtung der Luftschraube oder einer Verstellung der Luftschraubenblätter bei gleichbleibender Drehrichtung der Luftschraube. Mit dem neuen Luftkissenfahrzeug kann eine Bremsung aber einfacherweise auch durch Drehen des Schwenkaggregates um 180° erfolgen und auf die oben angegebenen aufwendigen Methoden verzichtet werden. Es muß kein mechanischer Antriebsstrang mitgeschwenkt werden, daher ist dies mit sehr geringem konstruktivem Aufwand realisiert.

Damit während der Schwenkung des Schwenkaggregates dessen Schub nicht zu einer Drehung des Luftkissenfahrzeugs führt, sind vorteilhaft ein Paar Schwenkaggregate oder eine vielfache Anzahl von Schwenkaggregat-Paaren vorgesehen. Ein Schwenkaggregat eines Paares schwenkt dann in der einen Schwenkrichtung um 180° um seine vertikale Achse und das andere in der entgegengesetzten Schwenkrichtung um 180°. Die während der Schwenkung durch die Luftströmung verursachten Drehmomente sind entgegengesetzt gerichtet und kompensieren sich gegenseitig. Eine Drehung des Luftkissenfahrzeugs tritt nicht ein. Die Schwenkung kann unter maximaler Luftschraubendrehzahl erfolgen. Innerhalb kürzester Zeit kann somit von Vortrieb auf Bremsbetrieb gewechselt werden.

Der Energieerzeuger weist zweckmäßig einen modernen Generator auf, der von einer Antriebsmaschine angetrieben ist. Vorzugsweise sind der Generator und die Antriebsmaschine des Energieerzeugers zu einer kompakten Baugruppe zusammengefaßt, damit auch hier schwere und platzraubende Antriebselemente zur Verbindung dieser beiden Bauteile gespart werden können. Der Energieerzeuger bildet vorzugsweise die zentrale Energieversorgung für alle Elektromotoren. Er kann an beliebiger Stelle des Luftkissenfahrzeugs angeordnet werden. Es besteht dadurch weitgehende Freiheit bei der Konstruktion und somit die Möglichkeit, die Nutzlast und den Nutzraum gegenüber den bekannten Luftkissenfahrzeugen sehr zu vergrößern.

Die Zuführung der Antriebsenergie zu dem schwenkbaren Elektromotor kann über elektrische Schleifkontakte, flexible Kabel oder sonstige geeignete Mittel erfolgen. Auf diese Weise kann ein Schwenkaggregat über mehr als 360° schwenkbar ausgebildet sein.

Der Energieerzeuger kann als kompakte Antriebsmaschine eine Turbine aufweisen, die mit einem modernen Generator gekoppelt ist. Die Turbine weist ein erheblich geringeres Gewicht auf, als beispielsweise ein Dieselmotor. Außerdem kann sie im Gegensatz zu einem Dieselmotor, der die Luftschraube direkt antreibt, permanent unter optimalen Bedingungen betrieben werden. Das heißt, sie kann mit der günstigsten Drehzahl und unter der günstigsten Drehmomentbelastung arbeiten.

Selbstverständlich kann in einer einfachen Ausführungsform auch ein einfacher Verbrennungsmotor, beispielsweise eine Zwei- oder Viertaktkolbenmaschine, für einen vorteilhaften Brennstoff als Antriebsmaschine verwendet werden.

Um das Schwenkaggregat schnell um seine vertikale Achse in eine gewünschte Schwenkposition zu bewegen, ist es mit einem separaten Schwenkantrieb versehen. Einfacherweise weist dieser ebenfalls einen elektrischen Antriebsmotor und eine geeignete mechanische Stelleinrichtung auf.

Eine Weiterbildung des Luftkissenfahrzeugs weist zumindest ein Schwenkaggregat auf. Dieses dient einerseits zum Vortrieb und andererseits zur Richtungssteuerung des Fahrzeugs.

Vorzugsweise sind zwei Schwenkaggregate vorgesehen, die sowohl in Richtung der lateralen Hauptträgheitsachse des Luftkissenfahrzeugs als auch spiegelsymmetrisch zu dessen longitudinaler Hauptträgheitsachse angeordnet sind. Diese Anordnung bewirkt durch ihre besonders günstige Gewichtsverteilung zu den Seiten hin eine ausgezeichnete Stabilität im Schwebezustand. Die Manövrierfähigkeit ist aufgrund der in der lateralen Hauptträgheitsachse angreifenden Schubimpulse hervorragend und bei einer zur longitudinalen Hauptträgheitsachse parallelen Schwenkposition für die Geradeausfahrt besonders effizient. Das Luftkissenfahrzeug kann nach Art eines vierradgelenkten Kraftfahrzeugs eine Geradeausfahrt unter einem Winkel α zu seiner longitudinalen Hauptträgheitsachse durchführen. Damit ist eine Richtungssteuerung möglich, ohne das Luftkissenfahrzeug, wie bei einem Schiff, in die gewünschte Fahrtrichtung ausrichten zu müssen. Da das Fahrzeug weder in seine Fahrtrichtung gedreht werden muß, noch diese Drehung durch Gegensteuern mit einem entgegengesetzt gerichteten Dremoment gestopt werden muß, ist eine sehr gute Manövrierfähigkeit gegeben, bei der sich die Trägheit des Fahrzeugs nicht stark bemerkbar macht. Das Luftkissenfahrzeug läßt sich präzise Richtungssteuern und benötigt wenig Platz zum Manövrieren.

Eine andere Weiterbildung ist zweckmäßig mit zwei starren Schubaggregaten versehen, die ausschließlich zum Antrieb dienen. In diesem Fall ist zumindest ein Schubaggregat als Steueraggregat ausgebildet, das ausschließlich zur Richtungssteuerung dient. Diese besondere Konstruktion hat den Vorteil, daß das Manövrieren über ein einzelnes Steueraggregat erfolgt, das über seine Schwenkposition die Fahrtrichtung dirigiert.

Für die Konstruktion mit nur einem Steueraggregat ist die vertikal schwenkbare Anordnung desselben am Heck über der longitudinalen Hauptträgheitsachse mechanisch günstig, da der induzierte Schubvektor des Steueraggregates ein für die Richtungssteuerung maximales Drehmoment erzeugen kann.

Das Steueraggregat ist zum einfachen Verschwenken um seine vertikale Achse mit einem Schwenkantrieb versehen. Einfacherweise ist dieses ebenfalls mit einem elektrischen Antriebsmotor und einer geeigneten mechanischen Stelleinrichtung versehen.

In einer alternativen Weiterbildung des Luftkissenfahrzeugs ist sowohl sein Heck als auch sein Bug mit wenigstens einem Schwenkaggregat versehen. Diese besondere Konstruktion erlaubt die Erzeugung maximaler Drehmomente zur Richtungssteuerung sowohl durch das Heck-Schwenkaggregat als auch durch das Bug-Schwenkaggregat, wodurch die Manövrierfähigkeit weiter verbessert wird. Das Luftkissenfahrzeug kann mit dieser Konstruktion ebenfalls nach Art eines allradgelenkten Kraftfahrzeugs eine Geradeausfahrt unter einem Winkel α zu seiner longitudinalen Hauptträgheitsachse durchführen. Bevorzugt sind die Schwenkaggregate an Heck und Bug über der longitudinalen Hauptträgheitsachse vorgesehen.

Die Schwenk- und Steueraggregate sind vorzugsweise alle einzeln in Ihrer Schwenkposition steuerbar. Auf diese Weise ist bei einem Manöver die größte Variationsmöglichkeit für eine Richtungsänderung gegeben. Die Vielzahl der relativen Schwenkpositionen, die die einzelnen Schwenkaggregate zueinander einnehmen können, sollte jedoch auf solche reduziert werden, die für die Steuerung des Luftkissenfahrzeugs vorteilhaft sind. Dies kann auf mechanischem Wege oder einfach durch programmgestütze Steuerung der Schwenkantriebe erfolgen. Auf diese Weise ist das Luftkissenfahrzeug für den Fahrer problemlos beherrschbar.

Die als Schwenk- und/oder Steueraggregate ausgebildeten Schubaggregate sowie das Auftriebsgebläse sind vorzugsweise alle individuell mit der gewünschten Drehzahl der Luftschrauben antreibbar. Die möglichen Drehzahlkombinationen der einzelnen Luftschrauben zueinander sollten jedoch auch auf solche Kombinationen reduziert werden, die für die Steuerung des Luftkissenfahrzeugs vorteilhaft sind, so daß das Fahrzeug für den Fahrer problemlos beherrschbar ist. Dazu kann ebenfalls eine programmunterstützte Steuerung vorgesehen sein, die die Dosierung der individuellen Drehzahlen mehrerer Schub- oder Schwenkaggregate aneinander koppelt.

Um eine selbsttätige Korrektur der Schwenkposition der Schwenk- und oder Steueraggregate zu ermöglichen, kann ein Seitenwindmeßgerät vorgesehen sein, das die ermittelte Seitenwindkomponente erfaßt. Diese kann zur automatischen Einstellung der für eine Geradeausfahrt erforderlichen Schwenkposition der Schwenk- und/oder Steueraggregate ausgewertet werden oder, im Fall von starren Schubaggregaten, die nötige Schubverteilung oder die Ruderstellung beeinflußen.

Als weiterer Vorteil wird es angesehen, daß das erfindungsgemäße Luftkissenfahrzeug sehr einfach programmgestützt mit Hilfe eines Autopiloten steuerbar ist.

Die Luftschraube des Schwenk- und/oder Steueraggregates ist vorteilhaft ummantelt. Vorzugsweise sind die Luftschraubenblätter starr auf der Luftschraubennabe angeordnet.

Nachstehend ist die Erfindung in der Zeichnung beispielhaft veranschaulicht und im einzelnen anhand der Figuren beschrieben. Es zeigen:
- Fig. 1: eine Draufsicht auf eine Ausführungsform des Luftkissenfahrzeugs mit zwei Schwenkaggregaten, die in Richtung der lateral verlaufenden sowie spiegelsymmetrisch zu der longitudinalen Hauptträgheitsachse angeordnet sind,
- Fig. 2: eine Seitenansicht auf das Luftkissenfahrzeug gemäß Fig. 1,
- Fig. 3: eine Draufsicht auf das Luftkissenfahrzeug gemäß Fig. 1 während einer Geradeausfahrt unter einem Winkel α zur longitudinalen Hauptträgheitsachse,
- Fig. 4: eine Draufsicht auf das Luftkissenfahrzeug gemäß Fig. 1 während einer Drehung um eine vertikale Achse,
- Fig. 5: eine perspektivische Ansicht auf eine weitere Ausführungsform des Luftkissenfahrzeugs mit einem als Steueraggregat ausgebildeten Schubaggregat zur Richtungssteuerung,

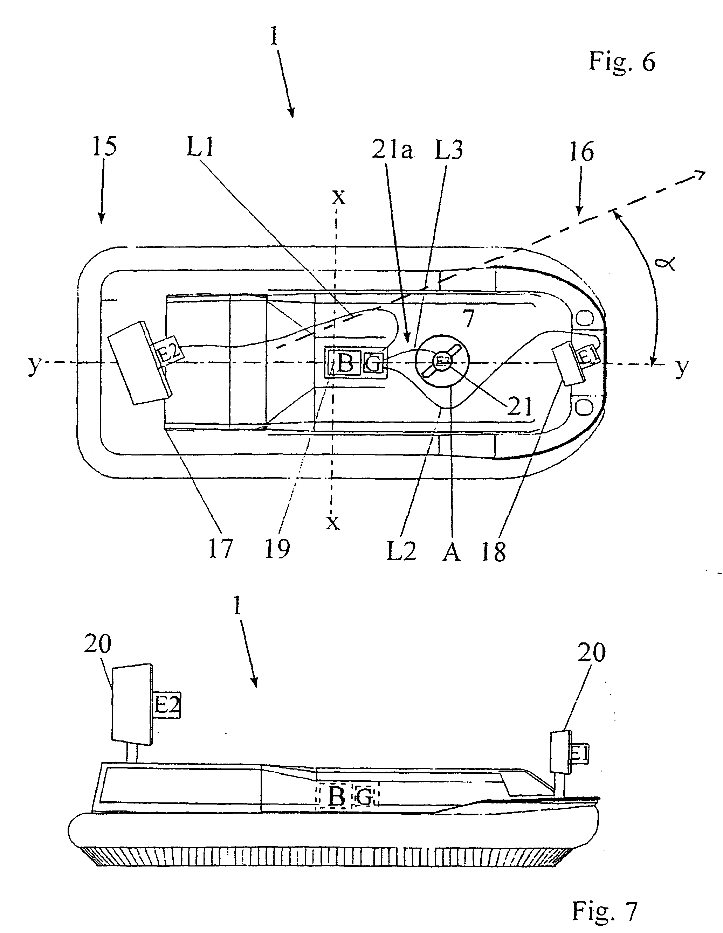

- Fig. 6: eine Draufsicht auf eine Ausführungsform des Luftkissenfahrzeugs, das sowohl am Heck als auch am Bug mit einem Schwenkaggregat versehen ist,
- Fig. 7: eine Draufsicht auf das Luftkissenfahrzeug gemäß Fig. 6.

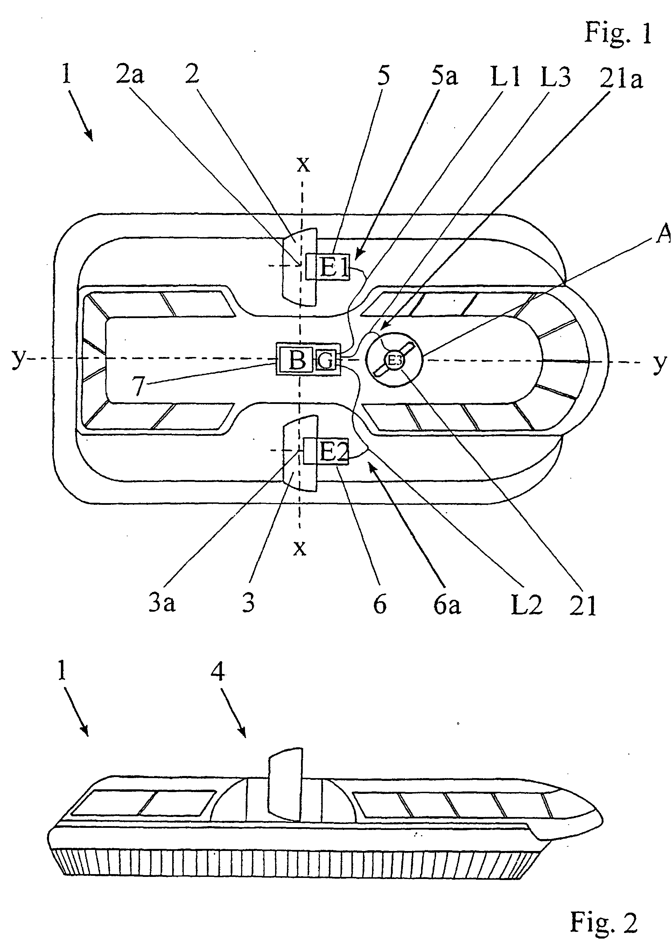

Nach Fig. 1 der Zeichnung besteht das Luftkissenfahrzeug 1 aus einem Auftriebsgebläse A zur Erzeugung eines Luftpolsters sowie zwei als Schwenkaggregat 2 und 3 ausgebildeten Schubaggregaten, die an der Fahrzeugoberseite 4 wirken. Die Schwenkaggregate 2 und 3 sind um ihre vertikalen Achsen 2a und 3a schwenkbar. Sie dienen zum Vortrieb und zur Richtungssteuerung des Fahrzeugs und sind sowohl in Richtung der lateralen Hauptträgheitsachse x-x des Luftkissenfahrzeugs als auch spiegelsymmetrisch zu dessen longitudinaler Hauptträgheitsachse y-y angeordnet. Sowohl das Auftriebsgebläse A als auch das Schubaggregat weisen je eine Luftschraube (nicht dargestellt) auf, die über je einen Motor 5, 6 und 21 angetrieben ist und eine Luftströmung erzeugt. Die Motoren 5, 6 und 21 sind unmittelbar an den Luftschrauben vorgesehen. Zur Erzeugung der von den Motoren 5, 6 und 21 benötigten Antriebsenergie ist ein zentraler Energieerzeuger 7 vorgesehen, der die Motoren 5, 6 und 21 über Energieleitungen 5a, 6a und 21a mit der Antriebsenergie versorgt. Die Schwenkaggregate 2 und 3 sind über einen hier nicht dargestellten Schwenkantrieb um die vertikalen Achsen 2a und 3a schwenkbar. Die Motoren 5, 6 und 21 sind als Elektromotoren E1, E2 und A sowie die Energieleitungen 5a, 6a und 21a als Elektroleitungen L1, L2 und L3 ausgebildet. Diese sind erheblich leichter als ein mechanischer Antriebsstrang. Sie sind in der vorliegenden Darstellung nur schematisch eingezeichnet. Da die Elektroleitungen L1, L2 und L3 nur sehr wenig Platz benötigen und nahezu beliebig verlegt werden können, wird der Nutzraum des Luftkissenfahrzeugs nahezu nicht einschränkt.

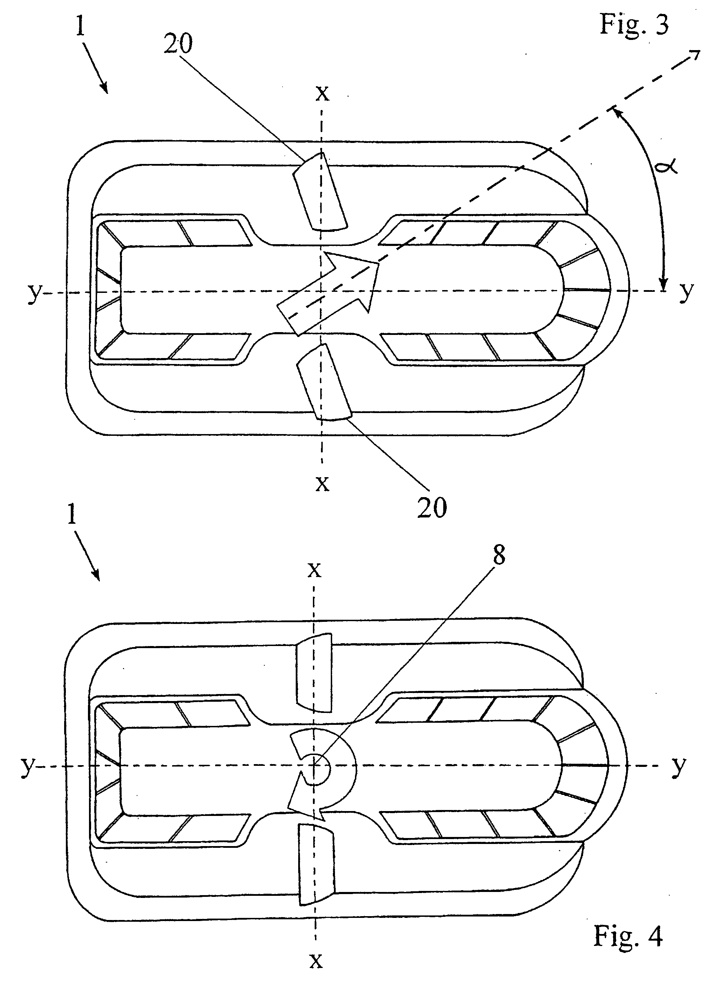

Die Anordnung der Schwenkaggregate gemäß der Fig. 1 bewirkt durch ihre besonders günstige Gewichtsverteilung zu den Seiten hin eine ausgezeichnete Stabilität im Schwebezustand. Die Manövrierfähigkeit ist aufgrund der in der lateralen Hauptträgheitsachse x-x angreifenden Schubimpulse hervorragend und bei paralleler Schwenkposition für die Geradeausfahrt besonders effizient. Das Luftkissenfahrzeug kann, wie in der Fig. 3 erkennbar, nach Art eines allradgelenkten Kraftfahrzeugs eine Geradeausfahrt unter einem Winkel α zu seiner longitudinalen Hauptträgheitsachse y-y durchführen. Durch eine Schwenkbewegung, beispielsweise des Schwenkaggregats 3 um 180°, ist wie in Fig. 4 anhand des um die vertikale Achse 8 eingezeichneten Pfeiles zu sehen, eine Drehung des Luftkissenfahrzeugs auf der momentanen Schwebestelle möglich.

Der Nutzraum des Luftkissenfahrzeugs ist nicht durch einen Antriebsstrang beeinträchtigt und die Raumausnutzung daher besonders gut.

Der Energieerzeuger 7 ist im Zentrum des Luftkissenfahrzeugs angeordnet und mit einer Antriebsmaschine B sowie einem Generator G versehen, der zur Erzeugung der elektrischen Antriebsenergie für die Elektromotoren E1 und E2 dient. Die Gewichtsverteilung ist bei dieser Anordnung sehr gleichmäßig. Der Energieerzeuger 7 ist mit der Antriebsmaschine B und dem Generator G zu einer kompakten Baugruppe zusammengefaßt. Diese kann bereits bei der Konstruktion eines Luftkissenfahrzeugs optimal angeordnet und so der Nutzraum maximiert werden.

Als kompakte Antriebsmaschine B ist in der vorliegenden Ausführungsform eine Turbine eingesetzt, die ein geringeres Gewicht als eine vergleichbar leistungsfähige Kolbenmaschinen aufweist und kleiner ist als eine solche.

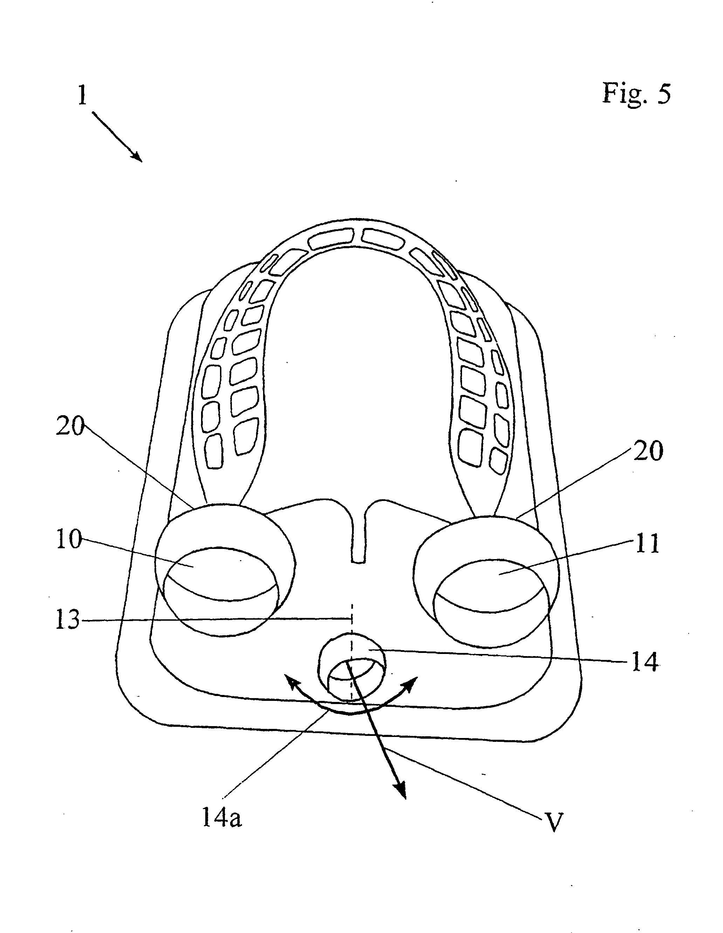

Die Ausführungsform des Luftkissenfahrzeugs gemäß Fig. 5 weist zwei starre Schubaggregate 10 und 11 auf, die ausschließlich zum Vortrieb dienen. Es ist ein zusätzliches Schubaggregat als Steueraggregat 14 vorgesehen, das, wie durch den Pfeil 14a angedeutet, um seine vertikale Achse 13 schwenkbar ist. Es dient ausschließlich zur Richtungssteuerung des Fahrzeugs. Diese besondere Konstruktion hat den Vorteil, daß das Manövrieren über ein einzelnes Steueraggregat 14 erfolgt, das über seine Schwenkposition die Fahrtrichtung dirigiert. Auch hier ist zum Schwenken des Steueraggregates 14 ein nicht dargestellter Schwenkantrieb vorgesehen.

Für die Konstruktion mit nur einem Steueraggregat 14 ist die Anordnung desselben am Heck 15 über der longitudinalen Hauptträgheitsachse y-y mechanisch besonders günstig, da der induzierte Schubvektor V des Steueraggregates ein für die Richtungssteuerung maximales Drehmoment erzeugen kann.

In einer alternativen Ausführungsform des Luftkissenfahrzeugs sind sein Heck 15 und sein Bug 16 mit je einem Schwenkaggregat 17 und 18 versehen. Diese besondere Konstruktion erlaubt die Erzeugung maximaler Drehmomente zur Richtungssteuerung sowohl durch das Heck-Schwenkaggregat 17 als auch durch das Bug-Schwenkaggregat 18, wodurch die Manövrierfähigkeit weiter verbessert wird. Das Luftkissenfahrzeug kann mit dieser Konstruktion ebenfalls nach Art eines allradgelenkten Kraftfahrzeugs eine Geradeausfahrt unter einem Winkel α zu seiner longitudinalen Hauptträgheitsachse durchführen. Eine Schwenkung, beispielsweise des Heck-Schwenkaggregates 17 um 90° und des Bug-Schwenkaggregates 18 um minus 90°, ermöglicht auch mit dieser Ausführungsform eine Drehung des Luftkissenfahrzeugs um eine vertikale Achse 19, genau auf der momentanen Schwebestelle.

Die Schwenkaggregate 17 und 18 an Heck 15 und Bug 16 sind über der longitudinalen Hauptträgheitsachse y-y vorgesehen. Das Bug-Schwenkaggregat 18 ist kleiner ausgebildet als das Heck-Schwenkaggregat 17. Es dient hauptsächlich zur Richtungssteuerung des Fahrzeugs. Für den Antrieb des Luftkissenfahrzeugs ist im wesentlichen das Heck-Schwenkaggregat 17 vorgesehen.

Die Luftschraube der Schwenk- und/oder Steueraggregate ist vorteilhaft mit einer Ummantelung 20 versehen.

### Luftkissenfahrzeug

### Bezugszeichenliste

- 1: Luftkissenfahrzeug
- 2: Schwenkaggregat
- 2a: vertikale Achse
- 3: Schwenkaggregat
- 3a: vertikale Achse
- 4: Fahrzeugoberseite
- 5: Motor
- 5a: Energieleitung
- 6: Motor
- 6a: Energieleitung
- 7: Energieerzeuger
- 8: vertikale Achse
- 10: starres Schubaggregat
- 11: starres Schubaggregat
- 13: vertikale Achse
- 14: Steueraggregat
- 14a: Pfeil
- 15: Heck
- 16: Bug
- 17: Schwenkaggregat (Heck)
- 18: Schwenkaggregat (Bug)
- 19: vertikale Achse
- 20: Ummantelung
- 21: Motor
- 21a: Energieleitung
- A: Auftriebsgebläse
- B: Antriebsmaschine
- E1: Elektromotor
- E2: Elektromotor
- G: Generator
- L1: Elektroleitung
- L2: Elektroleitung
- L3: Elektroleitung
- x-x: laterale Hauptträgheitsachse
- y-y: longitudinale Hauptträgheitsachse
- α: Winkel
- V: Schubvektor

## Patentansprüche

1. Luftkissenfahrzeug mit mindestens einem Gebläse zur Erzeugung eines Luftpolsters sowie mindestens einem Schubaggregat, das an der Fahrzeugoberseite (4) wirkt, wobei das Schubaggregat zum Vortrieb des Fahrzeugs dient und sowohl das Gebläse als auch das Schubaggregat mindestens eine Luftschraube aufweisen, die über einen Motor (5, 6, 21) angetrieben ist und eine Luftströmung erzeugt, wobei der Motor für das Schubaggregat unmittelbar an der Luftschraube des Schubaggregats angeordnet ist, **dadurch gekennzeichnet, daß** der Motor des Gebläses unmittelbar an der Luftschraube des Gebläses angeordnet ist, daß die an den Luftschrauben angeordneten Motoren Elektromotoren (5, 6, 21) sind und daß zur Erzeugung der von den Elektromotoren (E1, E2, A) benötigten elektrischen Antriebsenergie zumindest ein zentraler Energieerzeuger (7) vorgesehen ist, der den Elektromotor (E1, E2, A) über eine Energieleitung (5a, 6a, 21a) mit der Antriebsenergie versorgt.

2. Luftkissenfahrzeug nach Anspruch 1, **dadurch gekennzeichnet, daß** der Energieerzeuger (7) einen Generator (G) aufweist, der von einer Antriebsmaschine (B) angetrieben ist.

3. Luftkissenfahrzeug nach Anspruch 1 oder 2, **dadurch gekennzeichnet, daß** der Energieerzeuger (7) als Antriebsmaschine (B) eine Turbine aufweist.

4. Luftkissenfahrzeug nach Anspruch 1 oder 2, **dadurch gekennzeichnet, daß** der Energieerzeuger (7) als Antriebsmaschine (B) einen Verbrennungsmotor aufweist.

5. Luftkissenfahrzeug nach einem der Ansprüche 1 bis 4, **dadurch gekennzeichnet, daß** zumindest ein Schubaggregat als Schwenkaggregat (2, 3) ausgebildet ist, das um eine vertikale Achse (2a, 3a) schwenkbar ist und sowohl zum Antrieb als auch zur Richtungssteuerung dient.

6. Luftkissenfahrzeug nach Anspruch 5, **dadurch gekennzeichnet, daß** das Schwenkaggregat zum Verschwenken um seine vertikale Achse mit einem Schwenkantrieb versehen ist.

7. Luftkissenfahrzeug nach Anspruch 5 oder 6, **dadurch gekennzeichnet, daß** zwei Schwenkaggregate (2, 3) vorgesehen sind, die sowohl in Richtung der lateralen Hauptträgheitsachse x-x des Luftkissenfahrzeugs als auch spiegelsymmetrisch zu dessen longitudinaler Hauptträgheitsachse y-y angeordnet sind.

8. Luftkissenfahrzeug nach einem der Ansprüche 1 bis 4, **dadurch gekennzeichnet, daß** zwei starre Schubaggregate (10, 11) vorgesehen sind, die ausschließlich zum Antrieb dienen, und daß zumindest ein Schubaggregat als Steueraggregat (14) ausgebildet ist, das ausschließlich zur Richtungssteuerung dient.

9. Luftkissenfahrzeug nach Anspruch 8, **dadurch gekennzeichnet, daß** ein Steueraggregat (14) am Heck (17) über der longitudinalen Hauptträgheitsachse y-y angeordnet und in seiner vertikalen Achse schwenkbar (19) ist.

10. Luftkissenfahrzeug nach Anspruch 9, **dadurch gekennzeichnet, daß** das Steueraggregat zum Verschwenken um seine vertikale Achse mit einem Schwenkantrieb versehen ist.

11. Luftkissenfahrzeug nach Anspruch 5 oder 6, **dadurch gekennzeichnet, daß** sowohl sein Heck (15) als auch sein Bug (16) mit wenigstens einem Schwenkaggregat (17, 18) versehen ist.

12. Luftkissenfahrzeug nach einem der Ansprüche 1 bis 11, **dadurch gekennzeichnet, daß** die Drehzahl einzelner Luftschrauben individuell steuerbar ist.

13. Luftkissenfahrzeug nach einem der Ansprüche 1 bis 12, **dadurch gekennzeichnet, daß** ein Seitenwindmeßgerät vorgesehen ist, und daß mit der ermittelten Seitenwindkomponente die Richtungssteuerung korrigierbar ist.

14. Luftkissenfahrzeug nach einem der Ansprüche 1 bis 13, **dadurch gekennzeichnet, daß** die Luftschraube ummantelt ist.

15. Luftkissenfahrzeug nach einem der Ansprüche 1 bis 14, **dadurch gekennzeichnet, daß** die einzelnen Schaufelblätter der Luftschraube starr mit der Nabe der Luftschraube verbunden sind.

## Claims

1. Hovercraft with at least one fan for producing an air cushion and at least one thrust unit which acts on the upper side (4) of the craft, wherein the thrust unit is used to propel the craft, and both the fan and the thrust unit comprise at least one propeller which is driven by a motor (5, 6, 21) and produces an air current, wherein the motor for the thrust unit is disposed directly on the propeller of the thrust unit, **characterised in that** the motor of the fan is disposed directly on the propeller of the fan, that the motors which are disposed on the propellers are electric motors (5, 6, 21), and that at least one central power production device (7) is provided to produce the electrical drive power which is required by the electric motors (E1, E2, A), which device supplies the electric motors (E1, E2, A) with the drive power via a power line (5a, 6a, 21a).

2. Hovercraft according to Claim 1, **characterised in that** the power production device (7) comprises a generator (G) which is driven by a prime mover (B).

3. Hovercraft according to Claim 1 or 2, **characterised in that** the power production device (7) comprises a turbine as prime mover (B).

4. Hovercraft according to Claim 1 or 2, **characterised in that** the power production device (7) comprises an internal combustion engine as prime mover (B).

5. Hovercraft according to any one of Claims 1 to 4, **characterised in that** at least one thrust unit is formed as a swivel unit (2, 3) which can swivel about a vertical axis (2a, 3a) and is used. both for drive and direction control purposes.

6. Hovercraft according to Claim 5, **characterised in that** the swivel unit is provided with a swivel drive for swivelling about its vertical axis.

7. Hovercraft according to Claim 5 or 6, **characterised in that** two swivel unit units (2, 3) are provided, these being disposed both in the direction of the lateral principal axis of inertia x-x of the hovercraft and in axial symmetrical fashion about the latter's longitudinal principal axis of inertia y-y.

8. Hovercraft according to any one of Claims 1 to 4, **characterised in that** two rigid thrust units (10, 11) are provided, these being used solely for drive purposes, and that at least one thrust unit is formed as a control unit (14) which is used solely for direction control purposes.

9. Movercraft according to Claim 8, **characterised in that** one control unit (14) is disposed at the stern (17) above the longitudinal principal axis of inertia y-y and can be swivelled (19) about its vertical axis.

10. Hovercraft according to Claim 9, **characterised in that** the control unit is provided with a swivel drive for swivelling about its vertical axis.

11. Hovercraft according to Claim 5 or 6, **characterised in that** both its stern (15) and its bow (16) are provided with at least one swivel unit (17, 18).

12. Hovercraft according to any one of Claims 1 to 11, **characterised in that** the rotational speed of individual propellers can be individually controlled.

13. Hovercraft according to any one of Claims 1 to 12, **characterised in that** a cross-wind gauge is provided, and that the direction control can be corrected with the cross-wind component which is established.

14. Hovercraft according to any one of Claims 1 to 13, **characterised in that** the propeller is shrouded.

15. Hovercraft according to any one of Claims 1 to 14, **characterised in that** the individual blades of the propeller are rigidly connected to the hub of the propeller.

## Revendications

1. Véhicule sur coussin d'air comportant au moins une soufflante pour produire un coussin d'air, ainsi qu'au moins un groupe propulseur agissant sur le côté supérieur de véhicule (4), le groupe propulseur servant à l'avancement du véhicule et tant la soufflante, qu'également le groupe propulseur, présentant au moins une hélice aérienne, entraînée par un moteur (5, 6, 21) et produisant un écoulement d'air, le moteur prévu pour le groupe propulseur étant disposé directement sur l'hélice aérienne du groupe propulseur, **caractérisé en ce que** le moteur de la soufflante est disposé directement sur l'hélice aérienne de la soufflante, **en ce que** les moteurs disposés sur les vis aériennes sont des moteurs électriques (5, 6, 21), et **en ce que**, pour produire l'énergie d'entraînement électrique nécessaire aux moteurs électriques (E1, E2, A), il est prévu au moins un générateur central d'énergie (7) alimentant le moteur électrique (E1, E2, A) en énergie d'entraînement par une ligne de transmission d'énergie (5a, 6a, 21a).

2. Véhicule sur coussin d'air selon la revendication 1, **caractérisé en ce que** le générateur d'énergie (7) présente un générateur (C) entraîné par une machine d'entraînement (B).

3. Véhicule sur coussin d'air selon la revendication 1 ou 2, **caractérisé en ce que** le générateur d'énergie (7) présente une turbine faisant office de machine d'entraînement (B).

4. Véhicule sur coussin d'air selon la revendication 1 ou 2, **caractérisé en ce que** le générateur d'énergie (7) présente un moteur à combustion servant de machine d'entraînement (B).

5. Véhicule sur coussin d'air selon l'une des revendications 1 à 4, **caractérisé en ce qu'**au moins un groupe propulseur est réalisé sous la forme de groupe pivotant (2, 3), susceptible de pivoter autour d'un axe (2a, 3a) vertical et servant tant à l'entraînement, qu'également à la commande directionnelle.

6. Véhicule sur coussin d'air selon la revendication 5, **caractérisé en ce que** le groupe pivotant est muni d'un entraînement de pivotement pour assurer son pivotement autour de son axe vertical.

7. Véhicule sur coussin d'air selon la revendication 5 ou 6, **caractérisé en ce que** deux groupes pivotants (2, 3) sont prévus, disposés tant en direction de l'axe d'inertie principale latéral x-x du véhicule sur coussin d'air, qu'également, de façon répondant à une symétrie spéculaire par rapport à son axe d'inertie principale longitudinal y-y.

8. Véhicule sur coussin d'air selon l'une des revendications 1 à 4, **caractérisé en ce que** deux groupes propulseurs (10, 11) fixes sont prévus, servant exclusivement à l'entraînement, et **en ce qu'**au moins un groupe propulseur est réalisé sous la forme de groupe de commande (14) servant exclusivement à la commande directionnelle.

9. Véhicule sur coussin d'air selon la revendication 8, **caractérisé en ce qu'**un groupe de commande (14) est disposé à la poupe (17), sur l'axe d'inertie principal longitudinal y-y, et est susceptible de pivoter (19) autour de son axe vertical.

10. Véhicule sur coussin d'air selon la revendication 9, **caractérisé en ce que** le groupe de commande, pouvant pivoter autour de son axe vertical, est muni d'un entraînement de pivotement.

11. Véhicule sur coussin d'air selon la revendication 5 ou 6, **caractérisé en ce que** tant sa poupe (15), qu'également sa proue (16), sont munies au moins d'un groupe pivotant (17, 18).

12. Véhicule sur coussin d'air selon l'une des revendications 1 à 11, **caractérisé en ce que** la vitesse de rotation des différentes hélices aériennes peut être commandée individuellement.

13. Véhicule sur coussin d'air selon l'une des revendications 1 à 12, **caractérisé en ce qu'**un appareil de mesure du vent latéral est prévu, et **en ce que** la commande directionnelle est susceptible d'être corrigée à l'aide la composante de vitesse latérale ayant été déterminée.

14. Véhicule sur coussin d'air selon l'une des revendications 1 à 13, **caractérisé en ce que** l'hélice aérienne est carénée.

15. Véhicule sur coussin d'air selon l'une des revendications 1 à 14, **caractérisé en ce que** les différentes pales de l'hélice aérienne sont reliées rigidement au moyeu de cette hélice aérienne.
